# EUROPÄISCHE PATENTSCHRIFT

(11) **EP 0 275 087 B1**
(45) Veröffentlichungstag und Bekanntmachung des Hinweises auf die Patenterteilung: **26.05.1993**
(21) Anmeldenummer: 88100339.6
(22) Anmeldetag: 12.01.1988
(51) Int. Cl.: G02B 6/38

(54) **Verbindungseinrichtung mit einem die Lichtwellenleiter umgebenden Aufnahmeteil**
Connector with sleeve part which surrounds optical fibres
Connecteur avec manchon entourant des fibres optiques

(30) Priorität: 15.01.1987 DE 3701038
(43) Veröffentlichungstag der Anmeldung: 20.07.1988
(73) Patentinhaber: SIEMENS AKTIENGESELLSCHAFT, 80333 München (DE)
(72) Erfinder: Kunze, Dieter, Dipl.-Ing., D-8027 Neuried (DE); Odemar, Norbert, D-8000 München 71 (DE); Schramm, Josef, D-8000 München 83 (DE)

(56) Entgegenhaltungen:
- EP-A- 0 125 525
- DE-A- 2 616 873
- DE-A- 2 701 436
- GB-A- 1 580 061

## Beschreibung

Die Erfindung betrifft eine Verbindungseinrichtung mit einem zwei kolinear angeordnete Lichtwellenleiter umgebenden Aufnahmeteil, bei dem der erforderliche Anpreßdruck durch mindestens eine, außen auf dem Aufnahmeteil aufsitzende Hülse erfolgt, wobei das Aufnahmeteil mindestens einen Bereich mit verringertem Außendurchmesser und mindestens einen Bereich mit vergrößertem Außendurchmesser aufweist und die Stoßstelle der Lichtleitfasern im Bereich des vergrößerten Außendurchmessers liegt, und wobei das Aufnahmeteil im Stoßbereich durchgehend zylindrisch und mit vergrößerten Außendurchmesser geschaltet ist und dieser vergrößerte Außendurchmesser bezogen auf den Innenduchmesser der Hülse so groß gewählt ist, daß diese in Preßsitz aufschiebbar ist und den Stoßbereich vollständig überdeckt.

Eine Verbindungseinrichtung dieser Art ist aus der DE-A-26 16 873 bekannt. Der verdickte Mittelbereich des Verbindungselementes, welcher durch eine aufgeschobene Hülse zusammengepreßt wird, umschließt dabei aber nur die blanke Lichtleitfaser. Die Hülse beeinflußt somit nur den Bereich beiderseits der blanken Faserenden und sie hat keinen Einfluß auf die noch ummantelten Bereiche der Lichtwellenleiter. Da aber normalerweise eine angreifende Zugkraft von außen, das heißt längs der ummantelten Lichtwellenleiter angreift, wäre bei einer Verwendung nur einer Klemmhülse die Stoßstelle im Bereich der blanken Faserenden nicht ausreichend geschützt. Es ist deshalb, um eine gute Zugentlastung zu gewährleisten, notwendig, außen, also im Bereich der noch ummantelten Lichtwellenleiter zusätzliche Abfangungen vorzusehen, beispielsweise in Form federnder Ringe die im Bereich der umhüllten Lichtwellenleiter zuzsätzlich eine radiale Druckkraft ausüben. Der erhebliche Nachteil einer derartigen Konstruktion besteht vor allem darin, daß zwei getrennte Fixierungsvorgänge notwendig sind, nämlich einer für die blanke Faser und zwei weitere (links und rechts außen) für die Zugentlastung der ummantelten Lichtwellenleiter. Darüber hinaus sind mehrere Bauteile (insgesamt z.B. drei Ringe nämlich die beiden federnden Ringe rechts und links und der mittlere Ring) erforderlich, um die sichere Zugentlastung der Stoßstelle zu bewirken. Schließlich ergibt eine derartige Lösung auch noch den Nachteil, daß die Baulänge der Verbindungsanordnung insgesamt vergrößert wird, weil ja allein wegen der mechanischen Handhabbarkeit zwischen dem erhöhten Mittelteil einerseits und den außen liegenden federnden Ringen andererseits zu Montagezwecken ein gewisser räumlicher Abstand erforderlich ist.

Durch die EP 0 045 594 ist eine Verbindungseinrichtung bekanntgeworden, bei der die Festklemmung und Zentrierung zweier zu koppelnder Lichtleitfasern durch zwei in Richtung Stoßbereich aufschiebbare Hülsen erfolgt. Durch das Aufschieben der Hülsen wird der Stoßbereich radial nach innen gedrückt, wodurch die Lichtleitfasern zwischen Rundstäben axial ausgerichtet und festgeklemmt werden. Dabei wird jedoch der Stoßbereich in montiertem Zustand nicht vollständig von den Hülsen überdeckt, was sich bei der Kopplung von Lichtleitfasern mit unterschiedlichen bzw. unrunden Querschnitten als nachteilig erweisen kann. Außerdem sind derart ausgebildete Verbindungseinrichtungen kaum zugbelastbar, da die ummantelten Endbereiche der eingeführten Lichtwellenleiter nicht ausreichend mitfixiert werden.

Der Erfindung liegt die Aufgabe zugrunde, eine zugbelastbare Verbindungseinrichtung zu schaffen, mit der zwei Lichtleitfasern mit geringem Aufwand einfach und präzise miteinander verbunden werden können.

Diese Aufgabe wird bei einer Verbindungseinrichtung der eingangs genannten Art dadurch gelöst, daß das Aufnahmeteil zwei Halbzylinder aufweist und daß im Bereich mit vergrößertem Außendurchmesser in dem von der Hülse umfaßten Abschnitt sowohl die entmantelten Lichtleitfasern als auch die ummantelten Lichtwellenleiter pressend festgehalten sind.

Bei der Erfindung ist allein durch das Aufschieben der einen Hülse sowohl eine Anpreßkraft auf die blanken Lichtwellenleiter ausübbar als auch eine radiale Kraft auf die ummantelten Lichtwellenleiterenden. Dadurch ist in einem einzigen Arbeitsgang und mit einem einzigen Element ein Anpreßdruck sowohl auf die blanken Lichtleitfasern als auch auf die ummantelten Lichtwellenleiter erzielt. Durch die Erfindung ist außerdem eine kurze Baulänge der Verbindungseinrichtung realisierbar, weil bereits mit der einen Hülse auch die für die Zugentlastung der ummantelten Lichtwellenleiter benötigten Kräfte erzeugt werden.

Weitere vorteilhafte Ausführungsformen bzw. Weiterbildungen der Erfindung sind in den Unteransprüchen wiedergegeben.

Die Erfindung und ihre Weiterbildungen werden nachfolgend anhand von Zeichnungen näher erläutert. Es zeigen:
- Figur 1: einen Längsschnitt einer ersten Verbindungseinrichtung nach der Erfindung,
- Figur 2: einen Querschnitt der Verbindungseinrichtung nach Figur 1,
- Figur 3: einen Längsschnitt einer zweiten Ausführungsform der erfindungsgemäßen Verbindungseinrichtung mit zwei Hülsen,
- Figur 4: einen Längsschnitt einer dritten Ausführungsform der erfindungsgemäßen Verbindungseinrichtung mit drei Hülsen,
- Figur 5: eine Seitenansicht des ungespannten Verbindungselementes nach Figur 4 ohne Hülsen,
- Figur 6: eine perspektivische Ansicht einer Handzange mit eingelegtem Verbindungselement zu dessen Montage.

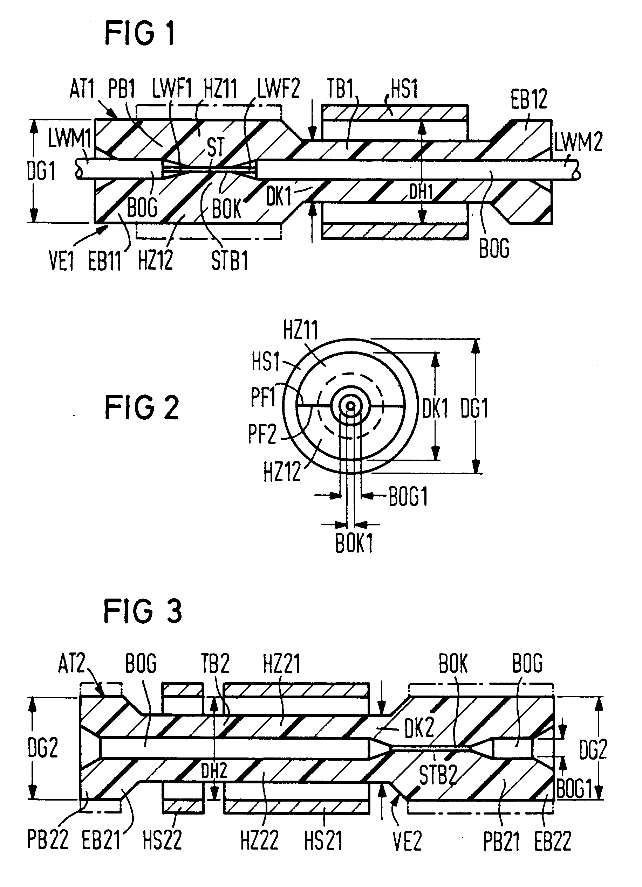

In Figur 1 und Figur 2 ist eine aus zwei Halbzylindern HZ11 und HZ12, sowie aus einer Metallhülse HS1 bestehende Verbindungseinrichtung VE1 dargestellt. Die beiden mit ihren flachen Paßflächen PF1 und PF2 aufeinandergesetzten Halbzylinder HZ11 und HZ12 bilden zusammen das Aufnahmeteil AT1, das in seinem Inneren koaxiale Bohrungen BOG und BOK mit den Durchmessern BOG1 bzw. BOK1 aufweist. Ein Preßbereich PB1 und ein unmittelbar anschließender Endbereich EB11, sowie der andere Endbereich EB12 haben den Außendurchmesser DG1. Zwischen dem Preßbereich PB1 und dem Endbereich EB12 weist das Aufnahmeteil AT1 einen Teilbereich TB1 mit verringertem Außendurchmesser DK1 auf, in dem sich die Hülse HS1 im unmontierten Zustand mit ausreichend Spiel befindet. Die Übergänge zwischen den Außendurchmessern DG1 und DK1 sind dabei vorzugsweise konisch ausgeführt. In den Endbereichen EB11 und EB12 sowie im Teilbereich TB1 befinden sich die Bohrungen BOG mit ihrem größeren Innendurchmesser BOG1, die bis in die Randgebiete des Preßbereichs PB1 hineinreichen, wobei diese größeren Bohrungen BOG dann konisch in eine Bohrung BOK mit kleinerem Innendurchmesser BOK1 übergehen. Die Stoßstelle ST der blanken (entmantelten) Lichtleitfasern LWF1 und LWF2 im Bereich der kleineren Bohrung BOK befindet sich etwa in der Mitte des Preßbereiches PB1. Der Außendurchmesser DG1 des Preßbereiches PB1 ist etwas größer als der Innendurchmesser DH1 der Hülse HS1, so daß sich die Hülse HS1 unter Preßpassung auf den Preßbereich PB1 aufschieben läßt.

Bei der Montage wird so vorgegangen, daß die zu koppelnden, Lichtleitwellenleiter LWM1 und LWM2 in die Bohrungen BOG der Endbereiche EB11 und EB12 derart eingeführt werden, daß die entmantelten Lichtleitfasern LWF1 und LWF2 im Stoßbereich STB1 aneinander stoßen. Dabei ist zu beachten, daß die Stoßstelle ST in der Mitte des Stoßbereiches STB1 zu liegen kommt und die ummantelten Lichtwellenleiter LWM1 und LWM2 vor den beiden Übergängen von der größeren Bohrung BOG zur kleineren Bohrung BOK enden. Zum Festklemmen der eingeschobenen Lichtleitfasern LWF1 und LWF2 innerhalb des Aufnahmeteiles AT1 wird die Hülse HS1 auf den Preßbereich PB1 aufgeschoben. Dabei werden die beiden aus elastischem Material bestehenden Halbzylinder HZ11 und HZ12 gleichmäßig radial zusammengedrückt und an die Lichtleitfasern LWF1 und LWF2 angepreßt. Der im wesentlichen der Länge der Hülse HS1 entsprechende Preßbereich PB1 wird zweckmäßig so gewählt, daß in ihm sowohl die entmantelten Lichtleitfasern LWF1 und LWF2 als auch ein Teil der ummantelten Lichtwellenleiter LWM1 und LWM2 enthalten sind. Mit gestrichelten Linien ist die Lage der aufgeschobenen Hülse HS1 im fertig montierten Zustand in Fig. 1 dargestellt. Da auch die Endbereiche der ummantelten Lichtwellenleiter LWM1 und LWM2 mit dem Aufnahmeteil AT1 verpreßt sind, ist eine wirkungsvolle Zugentlastung des Stoßbereiches STB1 gewährleistet.

In Figur 3 ist eine weitere Ausführungsform einer mit VE2 bezeichneten Verbindungseinrichtung mit zwei Hülsen HS21 und HS22 dargestellt. Analog zu Figur 1 bilden die beiden plan aufliegenden Halbzylinder HZ21 und HZ22 mit ihren Bohrungen BOG und BOK das hohlzylindrische Aufnahmeteil AT2. Der Stoßbereich STB2 und der unmittelbar anschließende Endbereich EB22 bilden gemeinsam den breiteren Anpreßbereich PB21, während als zweiter schmaler ausgebildeter Anpreßbereich PB22, der Endbereich EP21 vorgesehen ist. Zwischen den beiden Anpreßbereichen PB21 und PB22, mit ihrem größeren Außendurchmesser DG2, befindet sich der Teilbereich TB2, dessen Durchmesser DK2 entsprechend kleiner ausgebildet ist, um die beiden Hülsen HS21 und HS22 im unmontierten Zustand mit ausreichend Spiel aufnehmen zu können. Die im Endbereich EB21 und anschließenden Teilbereich TB2 verlaufende Bohrung BOG mit dem größeren Durchmesser BOG1 verjüngt sich am Rand des Preßbereiches PB2 zur kleineren Bohrung BOK. Der entlang der kleineren Bohrung BOK verlaufende Stoßbereich STB2 endet ungefähr in der Mitte des Preßbereiches PB21, wo der Übergang zur größeren Bohrung BOG liegt, die über den Endbereich EB22 ausläuft. Gegenüber der Ausführungsform nach Figur 1 kann bei dieser Anordnung eine Lichtleitfaser unabhängig von einer zweiten geklemmt werden, womit, insbesondere bei unterschiedlich dicken Lichtleitfasern, eine bessere Zentrierung erreicht wird.

Bei der Montage wird die erste (hier nicht dargestellte) Lichtleitfaser von links in die beim Endbereich EB21 beginnende Bohrung BOG eingeführt, bis die Ummantelung der Lichtleitfaser am Durchmesserübergang zur kleineren Bohrung BOK ansteht, wobei die entmantelte Lichtleitfaser ungefähr in die Mitte des Stoßbereiches STB reichen soll (vgl. Figur 1). Da die Innendurchmesser DH2 der Hülsen HS21 und HS22 etwas kleiner sind als die Außendurchmesser DG2 des Aufnahmeteiles AT2, ist durch das Aufschieben der Hülse HS22 vorab eine zugfeste Verklemmung der ersten Lichtleitfaser mit dem Aufnahmeteil AT2 gewährleistet. Von rechts wird die zweite Lichtleitfaser in die Bohrung BOG des Endbereiches EB22 bis zum Zusammenstoßen mit der ersten schon fixierten Lichtleitfaser eingeführt. Darauf wird die Hülse HS21 auf den Preßbereich PB21 aufgeschoben, wodurch beide Lichtleitfasern in ihrem entmantelten Teil zentriert werden. Gleichzeitig wird auch die zweite rechte Lichtleitfaser in ihrem ummantelten Bereich in der Bohrung BOG zugfest verklemmt. Die derart im Preßsitz aufgeschobenen Hülsen HS21 und HS22 der fertig montierten Verbindungseinrichtung VE2 sind gestrichelt dargestellt, wobei die Hülsen HS21 und HS22 mit den Stirnseiten der jeweiligen Endbereiche EB22 bzw. EB21 bündig abschließen. Alle Durchmesserübergänge sind analog zu Figur 1 vorzugsweise konisch ausgebildet.

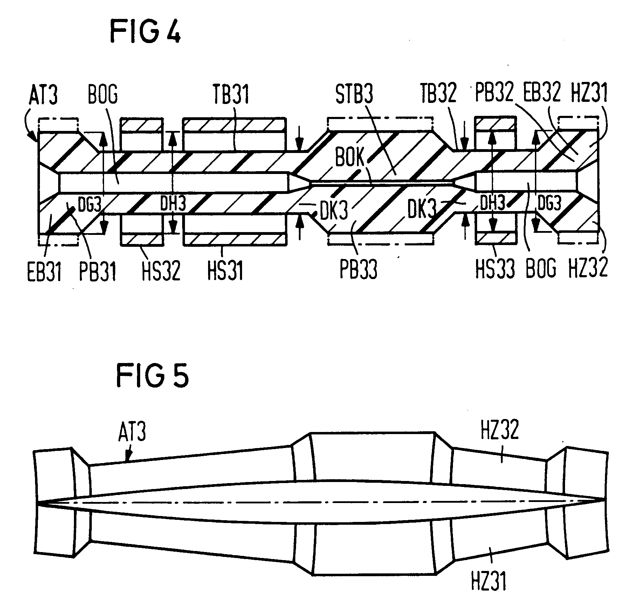

Eine weitere Ausführungsform einer aus drei Hülsen HS31, HS32 und HS33 bestehenden Verbindungseinrichtung VE3 ist in Figur 4 dargestellt. Der Stoßbereich STB3, sowie die beiden Endbereiche EB31 und EB32 des aus den beiden Halbzylindern HZ31 und HZ32 gebildeten Aufnahmeteiles AT3, bilden mit ihrem größeren Außendurchmesser DG3 die jeweiligen Anpreßbereiche PB33, PB31 und PB32 für die Hülsen HS31, HS32 und HS33. Die Innendurchmesser DH3 der Hülsen HS31, HS32 und HS33 sind dabei etwas kleiner als die Außendurchmesser DG3 des Aufnahmeteiles AT3. Die zwischen den Stoßbereich STB3 und den Endbereichen EB31 bzw. EB32 liegenden Teilbereiche TB31 und TB32 weisen einen geringeren Außendurchmesser DK3 auf und sind derart ausgebildet, daß im unmontierten Zustand der längere Teilbereich TB31 die Hülsen HS31 und HS32, der kürzere Teilbereich TB32 die Hülse HS33 mit ausreichend Spiel tragen kann. Die an den Stirnseiten der Endbereiche EB31 und EB32 beginnenden konzentrisch durch das Aufnahmeteil AT3 verlaufenden Bohrungen BOG zur Aufnahme der unmantelten Lichtleitfasern verjüngen sich an den Rändern des Preßbereiches PB33 zur kleineren Bohrung BOK, welche die entmantelten Lichtleitfasern aufnehmen kann.

Bei der Montage wird eine erste Lichtleitfaser derart in die beim Endbereich EB31 auslaufende Bohrung BOG eingeführt, daß die entmantelte Lichtleitfaser ungefähr in der Mitte des Preßbereiches PB33 endet und die Ummantelung am Durchmesserübergang der Bohrungen BOG und BOK spätestens endet. Durch das Aufschieben der Hülse HS32 auf den Anpreßbereich PB31 wird die linke (ummantelte) Lichtleitfaser im Endbereich EB31 mit dem Aufnahmeteil AT3 verklemmt und in ihrer Lage zugfest gehalten. Eine zweite Lichtleitfaser wird darauf bis zum Zusammenstoßen mit der ersten von der rechten Seite eingeführt und analog zur ersten Lichtleitfaser durch die Hülse HS33 im Endbereich EB32 samt ihrer Ummantelung verklemmt. Die eigentliche Zentrierung wird schließlich durch das Aufschieben der Hülse HS31 auf den Preßbereich PB33 erreicht, indem die dabei auftretenden radialen Kräfte im Stoßbereich STB3 die entmantelten Lichtleitfasern exakt fluchtend ausrichten. Die Lage der aufgeschobenen Hülsen HS31, HS32 und HS33 bei einer vollständig zusammengebauten Verbindungseinrichtung VE3 ist in Figur 4 gestrichelt dargestellt.

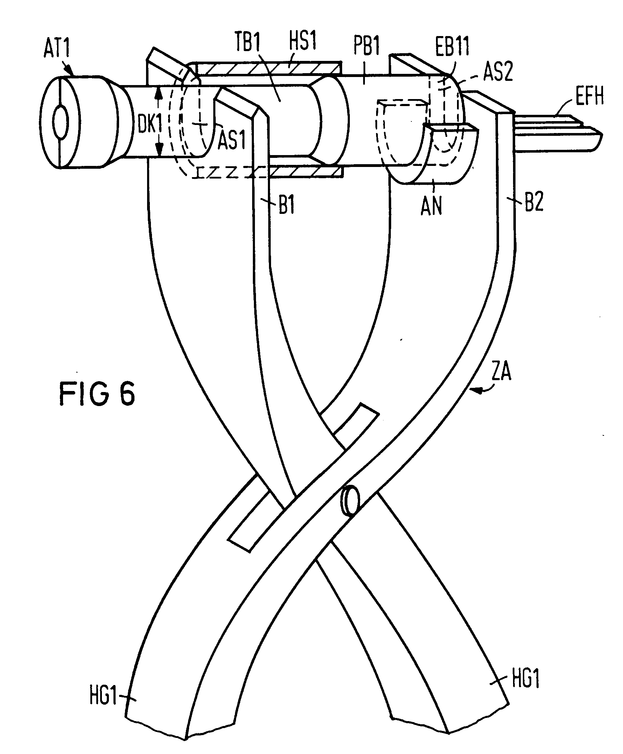

Um die Lichtleitfasern problemlos in die ungespannte Verbindungseinrichtung VE1 - VE3 einführen zu können, ist es zweckmäßig, daß eine Spielanpassung zwischen den Bohrungen BOG bzw. BOK und den Lichtleitfasern gegeben ist. Die beiden Halbzylinder z.B. HZ31 und HZ32 können deshalb im Mittelbereich im Abstand von einander gehalten werden, wie Figur 5 in übertriebener Darstellung zeigt. Dies kann beispielsweise durch Längs- oder Quervorspannung der beiden Halbzylinder z.B. HZ31, HZ32 oder auch durch federnde Zwischenteile, die im ungespannten Zustand die beiden Halbzylinder z.B. HZ31, HZ32 auseinanderdrücken, erreicht werden.

Zur Erleichterung des Einführens der Lichtleitfasern dienen die trichterartigen Erweiterungen der auslaufenden Bohrungen BOG in den Endbereichen z.B. EB31 und EB32.

Zur weiteren Verbesserung der Kopplungsgüte kann eine Immersionsflüssigkeit in die Bohrung BOK des Aufnahmeteiles z.B. AT3 eingebracht werden. Dabei sollte dafür gesorgt werden, daß die überschüssige Immersionsflüssigkeit beim Einführen der Lichtleitfasern entweichen kann, was durch eine im Stoßbereich z.B. STB3 angebrachte Quernut zu gewährleisten ist.

Die in den erfindungsgemäßen Ausführungsbeispielen verwendeten Halbzylinder HZ11 bis HZ32 können aus Metall, Glas, Keramik oder Kunststoff bestehen. Vorzugsweise bestehen sie aus thermoplastischem Kunststoff, der zur Verringerung des thermischen Ausdehnungskoeffizienten mit Glas-, Mineral- oder Kohlenstofffasern gefüllt ist. Werkstoffe dieser Art können kostengünstig in Spritzguß- oder Preßtechnik hergestellt werden und haben eine gewisse Elastizität, so daß auch zwei Lichtleitfasern mit unterschiedlichem Durchmesser genau zentriert werden können.

Durch rippenförmige Vorsprünge an den Oberflächen der Halbzylinder z.B. HZ31, HZ32 oder durch axial geschlitzte Hülsen z.B. HS31 bis HS33 können die Federungseigenschaften der Verbindungseinrichtung z.B. VE3 verbessert werden. Um ein zuverlässiges Festsitzen der Hülsen z.B. HS31 bis HS33 auf den Preßbereichen PB31 bis PB33 zu gewährleisten und eine axiale Verschiebung zu unterbinden, können nasenförmige Vorsprünge an den Außenseiten der Preßbereiche PB31 bis PB33 und entsprechend korrespondierende Vertiefungen in den Randbereichen der Hülsen z.B. HS31 bis HS33 vorgesehen werden.

In Figur 6 ist eine Handzange ZA als Montagehilfe für die Verbindungseinrichtung VE1 bis VE3 (dargestellt ist VE1 aus Fig.1) gezeigt. Hierzu umfaßt eine Backe B1 mit der größeren Aussparung AS1 den Stirnbereich der aufzupressenden Hülse HS1, während die andere Backe B2, die durch ihre längliche Aussparung AS2 die eingeführte Lichtleitfaser nicht berührt, den Endbereich EB11 umschließt. An der Backe B2 ist zweckmäßigerweise ein Anschlag AN zur Aufnahme des Aufnahmeteiles AT1 und eine Einführhilfe EFH für die Lichtleitfaser angebracht. Durch Zusammendrücken der Handgriffe HG1 und HG2 wird die Hülse HS1 vom Teilbereich TB1 mit dem kleineren Außendurchmesser DK1 auf den Preßbereich z.B. PB1 geschoben. Damit wird eine besonders einfache und schnelle Montage der Verbindungseinrichtung erreicht.

### Figurenindex zu 87 P 1011 E

- AN: Anschlag
- AS1: Aussparung
- AT, AT1: Aufnahmeteil
- B1, B2: Backe
- BOG, BOK: Bohrung
- BOG1, BOK1: Innendurchmesser
- DG1, DG2, DG3: Außendurchmesser
- DH3: Innendurchmesser
- DK1, DK2, DK3: Durchmesser
- EB11, EB12: Endbereich
- EB21, EB22: Endbereich
- EB31, EB32: Endbereich
- EFH: Einführhilfe
- HG1, HG2: Handgriff
- HS1: Metallhülse
- HS21, HS22: Hülsen
- HS31, HS32,HS33: Hülsen
- HT2: Aufnahmeteil
- HZ11, HZ12: Halbzylinder
- HZ21, HZ22: Halbzylinder
- HZ31, HZ32: Halbzylinder
- LWF1, LWF2: Lichtleitfaser
- LWM1, LWM2: Lichtwellenleiter
- PB1: Preßbereich
- PB31, PB32, PB33: Anpreßbereich
- PF1, PF2: Paßflächen
- ST: Stoßstelle
- STB1, STB2, STB3: Stoßbereich
- TB2: Teilbereich
- TB21, TB22: Anpreßbereich
- TB31, TB32: Teilbereich
- VE1, VE2, VE3: Verbindungseinrichtung
- ZA: Handzange

## Patentansprüche

1. Verbindungseinrichtung mit einem zwei kolinear angeordnete Lichtwellenleiter (LWM1, LWM2) umgebenden Aufnahmeteil (AT1), bei dem der erforderliche Anpreßdruck durch mindestens eine außen auf dem Aufnahmeteil (AT1) aufsitzende Hülse (HS1) erfolgt, wobei das Aufnahmeteil (AT1) mindestens einen Bereich (TB1) mit verringertem Außendurchmesser (DK1) und mindestens einen Bereich (PB1) mit vergrößertem Außendurchmesser (DG1) aufweist und die Stoßstelle (ST) der Lichtleitfasern (LWF1, LWF2) im Bereich (PB1) des vergrößerten Außendurchmessers (DG1) liegt, und wobei das Aufnahmeteil (AT1) im Stoßbereich (STB1) durchgehend zylindrisch mit dem vergrößerten Außendurchmesser (DG1) gestaltet ist und dieser vergrößerte Außendurchmesser (DG1) bezogen auf den Innendurchmesser (DH1) der Hülse (HS1) so groß gewählt ist, daß diese in Preßsitz aufschiebbar ist und den Stoßbereich (STB1) vollständig überdeckt,
**dadurch gekennzeichnet,**
daß das Aufnahmeteil (AT1) zwei Halbzylinder (HZ11, HZ12) aufweist und daß im Bereich (PB1) mit vergrößertem Außendurchmesser (DG1) in dem von der Hülse (HS1) umfaßten Abschnitt sowohl die entmantelten Lichtleitfasern (LWF1, LWF2) als auch die ummantelten Lichtwellenleiter (LWM1, LWM2) pressend festgehalten sind.

2. Verbindungsteil nach Anspruch 1,
**dadurch gekennzeichnet,**
daß das Aufnahmeteil (AT2) zwei Hülsen (HS21, HS22) gleichen Innendurchmessers (DH2) aufweist, von denen die eine Hülse (HS21) auf den gesamten Stoßbereich (STB2), die andere Hülse (HS22) auf einen Endbereich (EB21) im Preßsitz aufschiebbar ist.

3. Verbindungsteil nach Anspruch 1,
**dadurch gekennzeichnet,**
daß das Aufnahmeteil (AT3) drei Hülsen (HS31, HS32, HS33) gleichen Innendurchmessers (DH3) aufweist, von denen die mittlere Hülse (HS31) auf den Stoßbereich (STB3) und die beiden außen liegenden Hülsen (HS32, HS33) auf die entsprechenden Endbereiche (EB31, EB32) des Aufnahmeteiles (AT3) im Preßsitz aufschiebbar sind.

4. Verbindungsteil nach Anspruch 2 oder 3,
**dadurch gekennzeichnet,**
daß die auf den Stoßbereich (ST3) aufschiebbare Hülse (HS31) in axialer Richtung gesehen breiter, die auf die Endbereiche (EB31,EB32) aufschiebbaren Hülsen (HS32, HS33) in axialer Richtung gesehen schmäler ausgebildet sind.

5. Verbindungsteil nach einem der vorhergehenden Ansprüche,
**dadurch gekennzeichnet,**
daß das Aufnahmeteil (AT1) außen konzentrische Bohrungen (BOG) mit vergrößertem Durchmesser (BOG1) zur Aufnahme der ummantelten Lichtwellenleiter (LWM1,LWM2) und im Stoßbereich eine Bohrung (BOK) mit verringertem Durchmesser (BOK1) zur Aufnahme der entmantelten Lichtleitfasern (LWF1,LWF2) aufweist.

6. Verbindungsteil nach Anspruch 5,
**dadurch gekennzeichnet,**
daß die Übergangsbereiche zwischen den Bohrungen (BOG, BOK) der Nut stufenförmig oder abgeschrägt, insbesondere konisch ausgeführt sind.

7. Verbindungsteil nach einem der vorhergehenden Ansprüche,
**dadurch gekennzeichnet,**
daß im unmontierten Zustand die beiden Halbzylinder (HZ31, HZ32) des Aufnahmeteiles (AT3) im Stoßbereich (STB3) einen Abstand aufweisen. (Fig. 5)

8. Verbindungsteil nach einem der vorhergehenden Ansprüche,
**dadurch gekennzeichnet,**
daß der Stoßbereich (STB3) eine Quernut zur Aufnahme überschüssiger Immersionsflüssigkeit aufweist.

9. Verbindungsteil nach einem der vorhergehenden Ansprüche,
**dadurch gekennzeichnet,**
daß die Übergangsbereiche zwischen den Bereichen (TB1) geringeren Außendurchmessers (DK1) und den Bereichen (PB1, EB12) größeren Außendurchmessers (DG1) abgeschrägt, insbesondere konisch ausgebildet sind.

10. Verbindungsteil nach einem der vorhergehenden Ansprüche,
**dadurch gekennzeichnet,**
daß die Oberfläche in Bereichen (PB1,EB12) vergrößerten Durchmessers (DG1) Verrippungen aufweisen und daß die Hülse (HS1) in ihrem Innenteil korrespondiert geschlitzt ausgebildet ist.

11. Verbindungsteil nach einem der vorhergehenden Ansprüche,
**dadurch gekennzeichnet,**
daß die zur Aufnahme der Lichtleitfasern dienenden Bohrungen (BOG) an ihren Enden als Einfangtrichter konusartig vergrößert ausgebildet sind.

## Claims

1. Connector device having a receptacle part (AT1) which surrounds two colinearly arranged optical wave-guides (LWM1, LWM2) and in which the required contact pressure is exerted by at least one sleeve (HS1) seated outside on the receptacle part (AT1), the receptacle part (AT1) having at least one region (TB1) of reduced outside diameter (DK1) and at least one region (PB1) of increased outside diameter (DG1), and the joint (ST) of the optical fibres (LWF1, LWF2) being situated in the region (PB1) of the increased outside diameter (DG1), and the receptacle part (AT1) being configured in the joint region (STB1) in a continuously cylindrical fashion with the increased outside diameter (DG1) and said increased outside diameter (DG1) being selected so large with reference to the inside diameter (DH1) of the sleeve (HS1) that the latter can be slipped on in a press fit and completely covers the joint region (STB1), characterised in that the receptacle part (AT1) has two half-cylinders (HZ11, HZ12), and in that in the region (PB1) of increased outside diameter (DG1) in the section embraced by the sleeve (HS1) both the cladded optical fibres (LWF1, LWF2) and the stripped optical waveguides (LWM1, LWM2) are retained in a pressing fashion.

2. Connector device according to Claim 1, characterised in that the receptacle part (AT2) has two sleeves (HS21, HS22) with the same inside diameter (DH2), of which one sleeve (HS21) can be slipped onto the entire joint region (STB2), and the other sleeve (HS22) can be slipped onto an end region (EB21) in the press fit.

3. Connector device according to Claim 1, characterised in that the receptacle part (AT3) has three sleeves (HS31, HS32, HS33) with the same inside diameter (DH3), of which the middle sleeve (HS31) can be slipped onto the joint region (STB3) and the two outer sleeves (HS32, HS33) can be slipped onto the corresponding end regions (EB31, EB32) of the receptacle part (AT3) in the press fit.

4. Connector device according to Claim 2 or 3, characterised in that the sleeve (HS31) which can be slipped onto the joint region (ST3) is constructed wider, seen in the axial direction, and the sleeves (HS32, HS33) which can be slipped onto the end regions (EB31, EB32) are constructed narrower, seen in the axial direction.

5. Connector device according to one of the preceding claims, characterised in that the receptacle part (AT1) has on the outside concentric bores (BOG) with an increased diameter (BOG1) for receiving the cladded optical waveguides (LWM1, LWM2), and in the joint region a bore (BOK) with a reduced diameter (BOK1) for receiving the stripped optical fibres (LWF1, LWF2).

6. Connector device according to Claim 5, characterised in that the transition regions between the bores (BOG, BOK) of the slot are designed in a step-like or bevelled, in particular conical, fashion.

7. Connector device according to one of the preceding claims, characterised in that in the unassembled state the two half-cylinders (HZ31, HZ32) of the receptacle part (AT3) have a spacing in the joint region (STB3). (Figure 5)

8. Connector device according to one of the preceding claims, characterised in that the joint region (STB3) has a transverse slot for receiving excess immersion liquid.

9. Connector device according to one of the preceding claims, characterised in that the transition regions between the regions (TB1) of smaller outside diameter (DK1) and the regions (PB1, EB12) of larger outside diameter (DG1) are constructed in a bevelled, in particular conical, fashion.

10. Connector device according to one of the preceding claims, characterised in that the surface in the regions (PB1, EB12) of increased diameter (DG1) has ribbings, and in that the sleeve (HS1) is constructed in its interior part in a correspondingly slotted fashion.

11. Connector device according to one of the preceding claims, characterised in that the bores (BOG) which serve to receive the optical fibres are constructed enlarged in a conical fashion at their ends as capture funnels.

## Revendications

1. Dispositif-connecteur de jonction comportant une partie de réception (AT1), qui entoure deux guides d'ondes optiques colinéaires (LWM1, LWM2) et dans laquelle la pression nécessaire de serrage est obtenue au moyen d'un manchon (HS1) qui s'applique extérieurement sur la partie de réception (AT1), et dans lequel la partie de réception (AT1) possède au moins une partie (TB1) possédant un diamètre extérieur réduit (TK1) et au moins une partie (PB1) possédant un diamètre extérieur accru (DG1), et le point d'aboutement (ST) des libres optiques (LWF1, LWF2) est situé dans la partie (PB1) possédant le diamètre extérieur accru (DG1), et dans lequel la partie de réception (AT1) est agencée, dans la zone d'aboutement (STB1), avec une forme continûment cylindrique possédant le diamètre extérieur accru (DG1) et on choisit une valeur élevée telle de ce diamètre extérieur accru (DG1) par rapport au diamètre intérieur (DH1) du manchon (HS1), que ce manchon peut être emmanché selon un ajustement serré et recouvre complètement la zone d'aboutement (STB1),
caractérisé par le fait que la partie de réception (AT1) comporte deux demi-cylindres (HZ11,HZ12) et que dans la partie (PB1) possédant un diamètre extérieur accru (DG1), aussi bien les libres optiques sans gaine (LWF1,LWF2) que les guides d'ondes optiques gainés (LWM1,LWM2) sont maintenus fermement par serrage, dans la section entourée par le manchon (HS1).

2. Dispositif-connecteur suivant la revendication 1, caractérisé par le fait que la partie de réception (AT2) comporte deux manchons (HS21,HS22) possédant un même diamètre intérieur (DH2) et dont l'un (HS21) est emmanché selon un ajustement serré sur l'ensemble de la zone d'aboutement (STB2) et dont l'autre (HS22) est emmanché selon un ajustement serré sur une zone d'extrémité (EB21).

3. Dispositif-connecteur suivant la revendication 1, caractérisé par le fait que la partie de réception (AT3) comporte trois manchons (HS31,HS32,HS33) possédant un même diamètre intérieur (DH3) et parmi lesquels le manchon central (HS23) peut être emmanché selon un ajustement serré sur la zone d'aboutement (STB3) et les deux autres manchons extérieurs (HS32,HS33) peuvent être emmanchés selon un ajustement serré sur les zones d'extrémité correspondantes (EB31,EB32) de la partie de réception (AT3).

4. Dispositif-connecteur suivant la revendication 2 ou 3, caractérisé par le fait que le manchon (HS31), qui peut être emmanché sur la zone d'aboutement (ST3), est plus large lorsqu'on regarde dans la direction axiale et que les manchons (HS32,HS33), qui peuvent être emmanchés sur les zones d'extrémité (EB31,EB32), sont plus étroits lorsqu'on regarde dans la direction axiale.

5. Dispositif-connecteur suivant l'une des revendications précédentes, caractérisé par le fait que la partie de réception (AT1) possède en outre des perçages concentriques (BOG) de diamètre accru (BOG1) et servant à loger les guides d'ondes optiques gainés (LWM1, LWM2) et possède, dans la zone d'aboutement, un perçage (BOK) de diamètre réduit (BOK1) et servant à loger les fibres optiques (LWF1,LWF2) non gainées.

6. Dispositif-connecteur suivant la revendication 5, caractérisé par le fait que les zones de jonction entre les perçages (BOG,BOK) de la rainure sont réalisées avec une forme étagée ou biseautée, notamment avec une forme conique.

7. Dispositif-connecteur suivant l'une des revendications précédentes, caractérisé par le fait qu'à l'état non monté, les deux demi-cylindres (HZ31,HZ32) de la partie de réception (AT3) sont séparés par certaines distances dans la zone d'aboutement (STB3). (Figure 5).

8. Dispositif-connecteur suivant l'une des revendications précédentes, caractérisé par le fait que la zone d'aboutement (STB3) possède une rainure transversale servant à recevoir un liquide d'immersion en excès.

9. Dispositif-connecteur suivant l'une des revendications précédentes, caractérisé par le fait que les zones de jonction entre les parties (TB1) possédant un diamètre extérieur réduit (DK1) et les parties (PB1,EB12) possédant un diamètre extérieur accru (DG1) sont réalisées avec une forme biseautée et notamment conique.

10. Dispositif-connecteur suivant l'une des revendications précédentes, caractérisé par le fait que la surface dans les zones (PB1,EB12) de diamètre accru (DG1) comporte des nervures et que le manchon (HS1) est réalisé avec une forme fendue correspondante au niveau de sa partie intérieure.

11. Pièce de jonction suivant l'une des revendications précédentes, caractérisée par le fait que les perçages (BOG), qui sont utilisés pour loger les fibres optiques, sont réalisés, au niveau de leurs extrémités, avec une taille accrue et sous une forme conique de manière à former des entonnoirs d'entrée.
